# DEMANDE DE BREVET EUROPEEN

(11) **EP 0 540 423 A1**
(43) Date de publication de la demande: **05.05.1993**
(21) Numéro de dépôt: 92402942.4
(22) Date de dépôt: 29.10.1992
(51) Int. Cl.: F16D 3/84

(54) **Dispositif de protection et de retenue de lubrifiant pour joint de transmission articulé, et joint homocinétique ainsi équipé**

(30) Priorité: 30.10.1991 FR 9113394
(71) Demandeur: GLAENZER SPICER, F-78301 Poissy (FR)
(72) Inventeur: Orain, Michel, F-78700 Conflans Ste Honorine (FR)
(74) Mandataire: Polus, Camille

(57) **Abrégé**

Le joint de transmission articulé, homocinétique, comprend un fût (12) entraîné en rotation par un croisillon (1) relié à un arbre (7).

Une navette (23) est en liaison de rotule étanche avec d'une part un collet (17) et d'autre part un élément suiveur coulissant (28). Les deux centres de rotule (P, Q) sont situés l'un (Q) sur l'axe (Z, Z′) du fût (12) au delà du segment (O₁-O₂) où se trouve le centre d'articulation (O) du joint, et l'autre sur l'axe de l'arbre (7) de l'autre côté du segment (O₁-O₂) mais à l'intérieur du joint.

Utilisation pour les joints à grande vitesse, grande dimension ou forte angularité usuelle de travail.

## Description

La présente invention concerne un dispositif de protection et de retenue de lubrifiant pour joint de transmission articulé, notamment joint homocinétique, destiné à assurer l'accouplement entre deux organes tournant, susceptibles de travailler sous angle.

La présente invention concerne également un joint homocinétique équipé d'un tel dispositif.

Il est connu par exemple dans le domaine de l'automobile d'assurer la retenue du lubrifiant et la protection indispensable au fonctionnement du mécanisme des joints homocinétiques équipant les arbres de transmission, par l'intermédiaire de soufflets élastiques reliant un bord ouvert d'un élément extérieur du joint, généralement en forme de fût, et le pourtour d'un arbre relié à un élément intérieur du joint, tel qu'un tripode ou croisillon.

Ces soufflets doivent remplir deux impératifs techniques difficilement conciliables:
- d'une part fermer d'une manière fiable et parfaite l'espace comprise entre le fût extérieur du joint et l'arbre intérieur de manière à constituer une enceinte close hermétiquement, contenant le mécanisme et le lubrifiant;
- d'autre part être assez déformables pour assurer la pérennité de cette fermeture souple alors que l'arbre se débat angulairement et le cas échéant (dans le cas de joints coulissants) axialement relativement au fût, et que le soufflet est déformé cycliquement à une fréquence égale à la vitesse de rotation du joint lorsque le joint travaille sous angle;
- et en même temps, être assez rigides pour que la constante de rappel élastique en position neutre des plis soit suffisamment élevée pour leur assurer, en dépit de l'inertie du lubrifiant, une fréquence propre supérieure à la vitesse de rotation, pour que le soufflet tende à revenir de lui-même à sa position neutre, à une vitesse au moins égale à celle correspondant à la vitesse maximale de rotation et malgré le lubrifiant qui le charge intérieurement.

De nombreux travaux ont été effectués pour mettre au point des élastomères pour ces soufflets ainsi que des profils performants et des fixations adaptés aux applications de l'automobile (voir FR-A-1 342 249, 1 347 808, 1 347 809, 1 399 682, 1 482 069).

Les parties actives de ces soufflets ou plis présentent un diamètre que l'on s'efforce de maintenir en dessous de 100 mm pour des raisons de fiabilité, de stabilité et d'endurance. Ces soufflets donnent globalement satisfaction pour les cas d'utilisation les plus courants.

Il n'en demeure pas moins que la fiabilité et la longévité des soufflets conditionnent l'endurance des mécanismes homocinétiques qui ne survivent pas à la perte de lubrifiant consécutive à la détérioration de ces soufflets.

On peut considérer en effet, qu'environ 90% des mises hors service des joints homocinétiques sont initiées par la crevaison du soufflet et la perte de lubrifiant. Cette faiblesse est aggravée lorsque les joints articulés doivent tourner à haute vitesse, disons entre 2 000 et 10 000 tours/minute ou/et présenter un diamètre excédant 100 mm, disons pour des vitesses périphériques situées entre 15 et 50 mètres par seconde.

En effet:
- en un même laps de temps, le nombre d'alternances de la contrainte de flexion dans l'élastomère croît comme la vitesse de rotation, et la fatigue du matériau croît de même;
- les forces inertielles croissant comme le carré des vitesses, augmentent considérablement les contraintes;
- la pression centrifuge dans le lubrifiant croît comme le carré de la vitesse de rotation et comme le carré de la hauteur dynamique du lubrifiant et requiert une très grand résistance à l'éclatement des parois élastiques des soufflets;
- les mouvements axiaux de l'arbre des joints coulissants, compression et extension, sont accompagnés de surpression ou de dépression s'exerçant dans l'enceinte du mécanisme. Or ces modifications de la pression relative altère le profil des plis de manière erratique et deviennent inacceptable pour les joints de grand diamètre;
- la durée de vie exigée peut dans certains cas (transports ferroviaires et maritimes) être bien supérieure à celle permise par les soufflets élastiques;
- enfin les applications aux véhicules tout-terrain, de travaux publics, ou travaillant dans des conditions de températures extrêmes, multiplient les probabilités d'agressions mécaniques et les risques de déchirures et de perforations des soufflets conventionnels.

La paroi élastique du soufflet, de par sa masse et celle du lubrifiant retenu, et les forces centrifuges qui en résultent, présente une tendance à l'instabilité radiale similaire à celle d'un arbre de transmission au voisinage de sa vitesse critique. Cette tendance ne peut être combattue qu'en accroissant l'épaisseur de cette paroi et la rigidité du matériau utilisé. Mais on la rendrait alors inapte à clore l'espace libre et variable entre l'arbre et le fût pendant la rotation du joint sous angle.

Par exemple, pour un rayon de 125 mm et une vitesse de rotation de 2 500 tours/minute, la pression exercée par le lubrifiant sur la paroi du soufflet s'élèverait à 5 kg/cm² environ, ce qui représente sensiblement la pression de gonflage de pneumatiques haute pression.

On en arriverait à une structure armée ayant une rigidité et un inertie incompatible avec la mobilité nécessaire à la fonction de fermeture du joint, en particulier avec les déformations cycliques lors du fonctionnement sous angle.

Depuis le début du développement industriel de l'automobile, les transmissions longitudinales des véhicules à propulsion par les roues arrières ont représenté l'essentiel des lignes d'arbres à haute vitesse, avec des vitesses de rotation sensiblement quadruples de celles des transmissions latérales des véhicules à traction avant. Le seul joint disponible sur le marché et utilisé massivement est le cardan, joint non homocinétique et non coulissant dont l'angularité continue est limitée à 3° ou 6° selon la vitesse de rotation et le degré de confort requis, le défaut d'homocinétie croissant comme le carré de l'angle de travail. Par contre, les quatre tourillonnements sur aiguilles des bras des croisillons sont protégés par des garnitures tournantes, peu sensibles à la force centrifuge, fiables, faciles à installer et qui présentent une endurance très satisfaisante.

Pour des applications spéciales on a aussi utilisé des joints homocinétiques à billes et à tripodes sur des arbres à haute vitesse. Cependant il a fallu respecter des restrictions d'angularité encore plus sévères qu'avec le cardan, bien que pour des raisons techniques différentes. En effet, les joints à billes sont sujets à un échauffement et une usure croissant rapidement avec l'angularité et de leur côté les joints à tripodes présentent un mouvements relatif d'orbitage inacceptable. Pour ces joints homocinétiques à grande vitesse travaillant à des angles continus limités à 2 ou 4°, les soufflets élastiques de retenue de lubrifiant classiques sont en général considérés comme suffisamment fiables.

Or, l'introduction du joint homocinétique centré et à haut rendement décrit par le FR-A-2 566 858 et la demande française non publiée 91 08 048 permet l'installation de lignes de transmission à haute vitesse présentant des brisures continues de 10° à 15°. En effet, ce joint réunit les trois caractéristiques indispensables à la transmission de puissance à haute vitesse avec des angularités continues pratiquement triples de celles autorisées jusqu'alors car il est parfaitement homocinétique, parfaitement centré et peu sujet à l'échauffement et à l'usure. Ces qualités assurent donc le confort du véhicule et la longévité de la ligne d'arbre. Mais, la possibilité d'utiliser ce nouveau joint dépend de la disponibilité d'un dispositif de protection et de retenue de lubrifiant d'égale performances et endurance, c'est-à-dire, pouvant tourner à haute vitesse sous angle moyen continu de 10 à 15° et ayant une grande longévité dans des conditions extrêmes de températures et d'environnement.

Le but de la présente invention est de concevoir un dispositif de protection et de retenue de lubrifiant convenant pour les joints homocinétiques, coulissants ou non, qui fonctionnement dans des conditions extrêmes, de par leur taille, leur angle de travail usuel et/ou leur vitesse de rotation, ce dispositif devant présenter le cas échéant une fiabilité et une longévité à l'échelle du service attendu dans l'industrie des transports maritimes et ferroviaires.

A cet effet, selon un premier aspect de l'invention, le dispositif de protection et de retenue de lubrifiant pour joint de transmission articulé, notamment joint homocinétique, comprenant un élément extérieur ou barillet et un élément intérieur relié à un arbre, l'élément extérieur ayant un bord définissant une ouverture autour de l'arbre, est caractérisé en ce qu'il comprend un collet qui définit le bord ouvert de l'élément extérieur avec un diamètre rétréci correspondant sensiblement au débattement angulaire permis à l'arbre relié à l'élément intérieur, et une navette mobile dans un sens sensiblement radial et interposée entre le bord de ladite ouverture et l'arbre, avec lesquels elle coopère par l'intermédiaire de moyens d'étanchéité et/ou d'articulation, quelle que soit la position angulaire relative des deux éléments du joint de transmission.

Le collet limite le rayon de l'ouverture, donc la pression, due à la force centrifuge, qu'exerce le lubrifiant sur la ligne d'étanchéité adjacente à l'ouverture. De plus, la navette rigide est elle-même à peu près insensible à la pression qui peut s'exercer sur elle, et elle est également insensible aux projections et autres agressions. L'étanchéité sur l'arbre n'est en principe pas soumise du tout à la pression centrifuge.

Selon un second aspect de l'invention, le joint de transmission articulée comprenant un élément extrérieur comprenant un fût et quatre couloirs oscillant contre une paroi intérieure du fût et s'ouvrant vers un axe du fût, ces quatre couloirs étant accouplés entre eux pour osciller en opposition de phase, et un élément intérieur comprenant un croisillon dont quatre bras sont engagés chacun de manière mobile dans l'un des couloirs, est caractérisé en ce que le joint est équipé d'un dispositif de protection selon le premier aspect de la présente invention.

L'invention sera mieux comprise et d'autres caractéristiques de celle-ci seront mises en évidence à l'aide de la description qui suit, en référence aux dessins annexés, illustrant à titre d'exemple non limitatif, comment l'invention peut être réalisée, et dans lesquels:
- la figure 1 est une vue en coupe longitudinale d'un joint homocinétique coulissant, selon un exemple de réalisation, représenté en partie en position alignée et en partie en position de travail sous angle;
- la figure 2 est une demi-coupe transversale vue en bout, d'un joint selon la figure 1;
- la figure 3 est une vue en coupe longitudinale d'un joint coulissant selon un autre exemple de réalisation, représenté en partie en position alignée et en partie en position de travail sous angle;
- la figure 4 est une vue de deux bagues de portée de la réalisation de la figure 3 ;
- la figure 5 est une vue en coupe longitudinale d'un joint coulissant selon un autre exemple de réalisation, représenté en partie en position alignée et en partie en position de travail sous angle;
- la figure 6 est une demi-vue en coupe longitudinale d'un joint non coulissant, selon une variante de réalisation;
- la figure 7 est une vue en coupe longitudinale d'un joint coulissant, selon un autre exemple de réalisation, représenté en partie en position alignée et en partie en position de travail sous angle;

Dans les exemples représentés sur les figures, le joint de transmission homocinétique est un joint à quatre galets, connu en soi, du type décrit dans le FR-A-2 566 858 et qui ne sera donc par redécrit en détail ci-après.

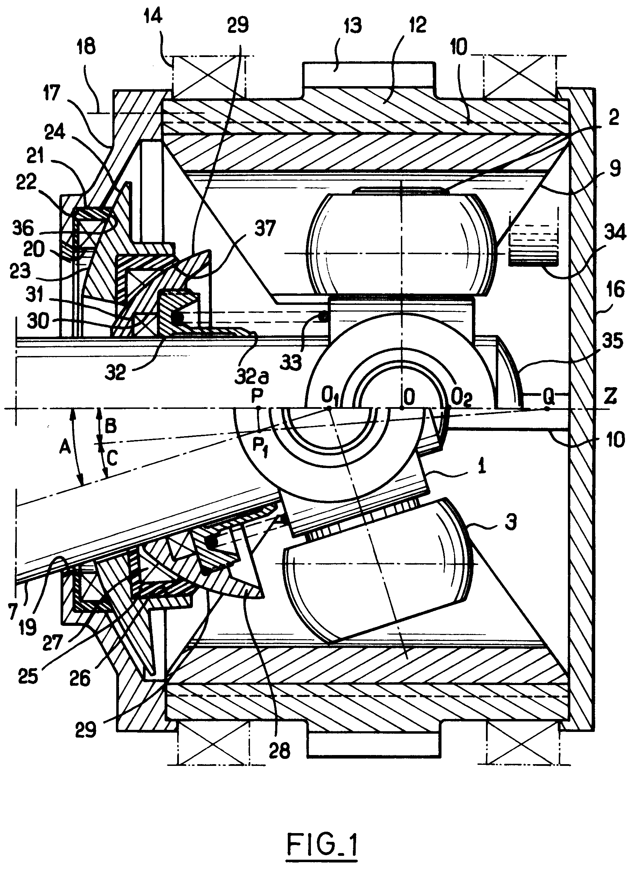

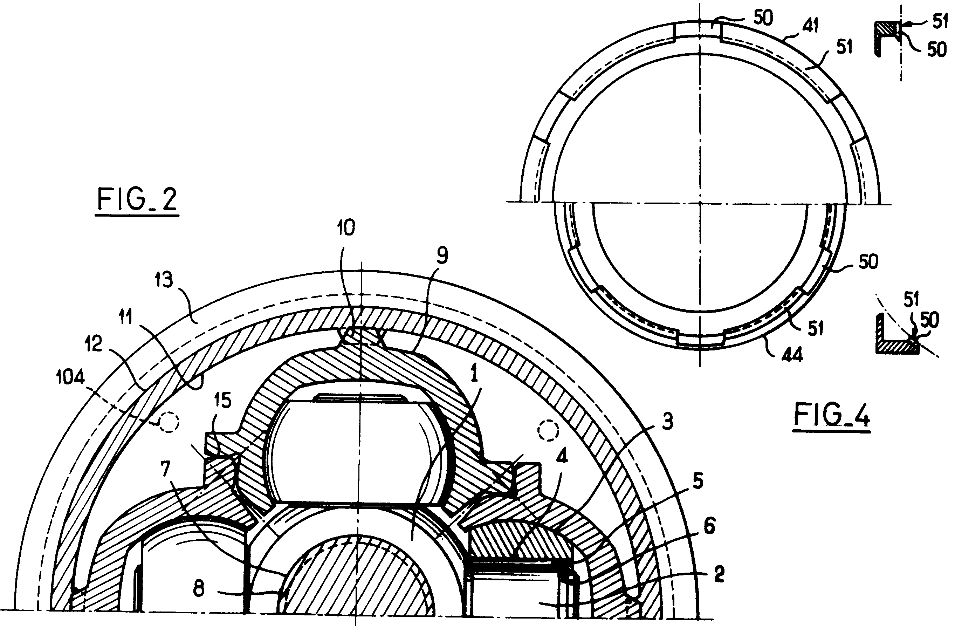

Les figures 1 et 2 représente selon une première version de l'invention un dispositif adapté à un tel joint homocinétique coulissant. Ce joint comprend un croisillon 1 muni de quatre tourillons cylindriques 2 recevant chacun un galet 3 tournant sur des aiguilles 4 retenues par des coupelles 5 et des joncs 6. Ce croisillon est fixé à un arbre 7 par des cannelures 8. Les galets 3 roulent à l'intérieur de couloirs 9 oscillants autour de l'engrènement 10 reliant le dôme de ces couloirs à l'alésage 11 d'un élément extérieur ou barillet 12, entraîne lui-même par une roue dentée 13 et tournant dans des roulements 14 du palier (non représenté). Les oscillations sont conjuguées entre les couloirs contigus par des dentures intermédiaires 15 (figure 2) grâce auxquelles chaque couloir 9 oscille en opposition de phase par rapport aux deux couloirs voisins. De telles oscillations sont imposées par les galets 3 lors du fonctionnement sous angle, tel que l'angle de travail A en bas de la figure 1. Le barillet 12 est fermé par un fond 16 du côté opposé à l'arbre 7. Un collet 17 est fixé au bord du barillet 12 autour de l'arbre 7 par un vissage 18 et il retient un roulement 14. L'ouverture 19 du collet 17 a un diamètre nettement réduit par rapport au diamètre intérieur du barillet 12. Ce diamètre est juste suffisant pour permettre à l'arbre 7 de prendre son angle de travail A maximal prévu comme représenté en bas de la figure 1.

Un opercule mobile ou navette 23, de forme annulaire, comporte une surface sphérique 24 portée de manière glissante sur une surface sphérique complémentaire 36 appartenant à une bague de portée 21, en matériau plastique ou alliage métallique anti-friction, laquelle bague 21 est emmanchée dans le chambrage 22 du couvercle 17, au voisinage immédiat de l'ouverture 19.

Une garniture d'étanchéité en oscillation 20, du type à lèvre à double arête ou de tout autre type connu, est incluse dans la bague de portée 21. On a ainsi réalisé entre le collet 17 et la navette 23 une liaison de rotule étanche ayant un centre Q situé sur l'axe OZ du barillet 12 à l'intérieur du joint.

La navette 23 présente en outre sur sa face tournée vers l'intérieur du joint un chambrage 26 dans lequel est emmanchée une bague de portée 25 qui est évidée pour retenir une garniture d'étanchéité 27. La garniture 27 et une surface de contact glissant sphérique 37 de la bague de portée 25 s'appuient sur une surface sphérique complémentaire 29 d'un élément suiveur 28 qui est traversé de manière étanche et axialement coulissante par l'arbre 7.

Pour cela, l'élément suiveur 28 comporte sur son alésage entourant l'arbre 7, un chambrage 30 qui emprisonne une garniture d'étanchéité en coulissement 31 retenue dans le chambrage 30 par une douille concentrique 32 apte à coulisser axialement sur l'arbre 7. La douille 32 est rapporté par vissage dans le corps de l'élément suiveur 28, du côté de l'intérieur du joint par rapport à la garniture d'étanchéité 31.

Il y a ainsi entre la navette 23 et l'élément suiveur 28 une liaison de rotule étanche ayant un centre P (joint en position alignée) ou P1 (joint sous angle de travail A) situé sur l'axe géométrique de l'arbre 7. Lorsque le joint est en position alignée, le segment 01 02, porté par l'axe OZ du barillet 12 et le long duquel se déplace le centre d'articulation O du joint lorsque le joint travaille en compression-extension, est situé entre le centre sphérique Q, situé du côté du fond 16 du barillet et le centre sphérique P situé du côté de la navette 23.

La liaison de rotule étanche 24, 36 est dissociable par déplacement de la navette 23 ensemble avec l'élément suiveur 28 vers l'intérieur du joint par rapport au collet 17. De même la liaison de roture étanche 29, 37 entre la navette 23 et l'élément suiveur 28 est dissociable par déplacement de l'élément suiveur vers l'intérieur du joint par rapport à la navette. Ces dissociations indésirables en service sont empêchée par un ressort de compression 33 monté autour de l'arbre 7 entre le croisillon 1 et l'élément suiveur 28 pour pousser ce dernier vers l'extérieur du joint.

Lors de la rotation, la pression centrifuge du fluide dont le niveau 34 est représenté schématiquement, ajoute sa poussée à celle du ressort.

Comme le montre le bas de la figure 1, lorsque l'arbre passe de la position alignée à la position sous angle A, le centre P de la surface sphérique 29 tourne autour du centre Q, la distance PQ étant constante, et l'axe de la navette 23 vient en P₁Q.

On voit que la navette 23 a oscillé d'un angle B relativement au couvercle 17 et que la rotule 28 a oscillé d'un angle: C = A-B relativement à la navette 23. Les angles B et C sont chacun égaux à environ la moitié de l'angle de travail A.

Les surfaces sphériques 24 et 29 respectivement de la navette 23 et de l'élément suiveur 28 doivent être d'une géométrie parfaite, polies et durcies. Elles s'appuient et se guident sur les surfaces complémentaires 36 et 37 des bagues de portée 21 et 25 respectivement. Ces bagues 21 et 25 assurent une flexion de portée constante des lèvres des garnitures d'étanchéité 20, 27 et sont lubrifiées par le liquide du joint puisqu'elles se trouvent à l'intérieur de l'enceinte close précisément par les garnitures à lèvres. Il en résulte une auto-conservation de l'état de surface poli des surfaces sphériques 24 et 29 et donc une usure quasi nulle des lèvres d'étanchéité des garnitures 20, 27.

Il faut noter que le mouvement des lèvres des garnitures 20, 27 sur leurs surfaces sphériques respectives 24, 29 est un rotulage et que pour un angle A, la vitesse de glissement est environ 20 à 50 fois plus petite que s'il s'agissait d'une étanchéité tournante de même diamètre et pour une même vitesse de rotation.

Par ailleurs, la pression dynamique du lubrifiant sur les contacts d'étanchéité est faible puisque le niveau dynamique 34 est proche du rayon des garnitures ou joints 20 et 27. Il en résulte une usure nulle des parties actives ou lèvres de ces derniers, car un film lubrifiant auto-entretenu évite leur contact direct avec leurs portées glissantes 24 et 29 tout en interdisant un quelconque débit par suite de la tension superficielle du lubrifiant et selon la technique éprouvée de ces garnitures 20, 27.

Enfin, la très faible vitesse de glissement évite toute possibilité d'échauffement, de perte d'élasticité et de dégradation des parties actives ou lèvres de ces garnitures 20, 27.

Il est à noter que la garniture d'étanchéité en coulissement 31 emprisonnée entre le chambrage 30 et la douille 32, assure l'étanchéité du coulissement axial de l'arbre 7 à l'intérieur de la rotule 28. Lors du coulissement de celui-ci, le centre O du croisillon peut aller jusqu'en O₁ en extension, et jusqu'en O₂ en compression, la course étant limitée par appui de l'extrémité intérieure 32a de la douille 32 contre le corps du croisillon 1 d'une part, et par appui d'un tampon élastique 35, fixé à l'extrémité de l'arbre 1, contre la plaque de fond 16 du barillet d'autre part.

La portée sphérique 36 de la bague 21 ainsi que la portée sphérique 37 de la bague 25 sont abondamment lubrifiées car elles sont situées à l'intérieur de l'enceinte du mécanisme à protéger, fermée par les garnitures 20 et 27.

Par ailleurs, les lèvres et arêtes d'étanchéité de ces garnitures 20 et 27 sont contiguës aux portées 36 et 37 respectivement, ce qui leur assure un travail en compression radiale rigoureusement constant.

Ces deux dispositions de l'invention confèrent au dispositif d'étanchéité l'efficacité et la longévité recherchées.

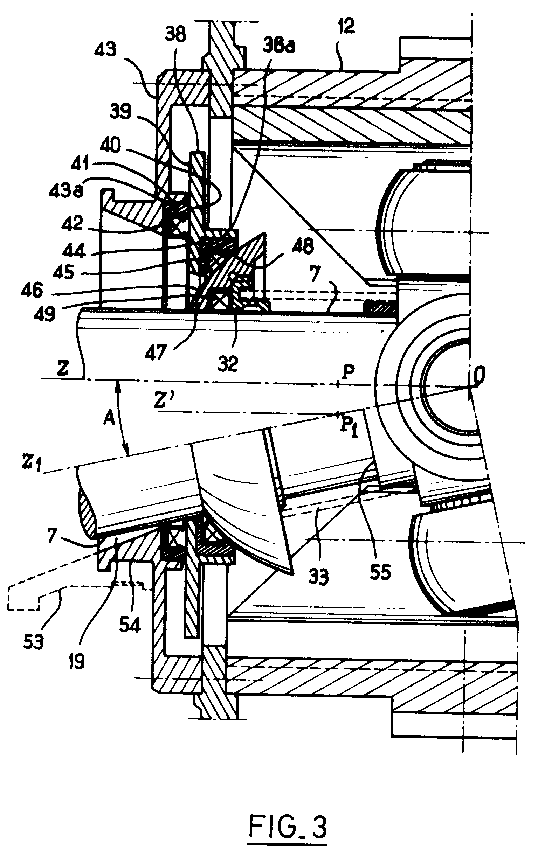

Dans le mode de réalisation représenté à la figure 3, la navette 38 comporte une surface de glissement extérieure plane ou glacée 39 appuyée sur une portée 40 d'une bague en matière plastique anti-friction 41 et sur une garniture d'étanchéité contiguë 42 insérée dans la bague 41 du côté de l'extérieur du joint par rapport à la portée 40.

La bague anti-friction 41 est elle-même emboîtée dans un contre-alésage 43a formé du côté intérieur de l'ouverture 19 du collet 43 fixé d'une manière étanche au barillet 12.

L'alésage 38a de la navette 38 retient emboîtée une bague anti-friction 44 dans laquelle est insérée une garniture d'étanchéité 45.

Une surface de portée sphérique "glacée" 46 d'un élément suiveur 47 glisse sur une surface complémentaire 48 de la bague 44 et sur la garniture contiguë 45 de la même manière que précédemment.

L'élément suiveur 47 porte intérieurement une garniture d'étanchéité 49 coulissante axialement sur l'arbre 7 et maintenue en place par la douille concentrique filetée 32. Le ressort 33 exerce une poussée axiale suffisante pour permettre le contact des garnitures d'étanchéité 42 et 45 contre les surfaces 39 et 46 de la navette 38 et de l'élément suiveur 47 lorsque le joint est immobile.

Lorsque le joint tourne, la pression centrifuge du lubrifiant ajoute son effet à celui du ressort 33 et applique les surfaces 39 et 46 contre les portées complémentaires 40 et 48 des bagues anti-friction 41 et 44 sans modifier la flexion radiale des arêtes et lèvres desdites garnitures d'étanchéité 45, 42, 49 qui travaillent donc dans d'excellentes conditions.

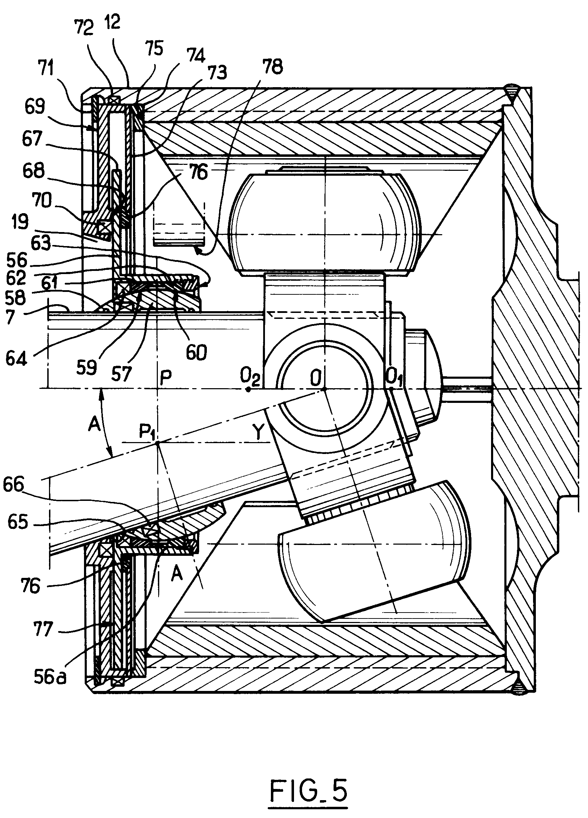

Les surfaces de glissement des portées 39 et 46 conservent indéfiniment leur état de surface "poli glacé" grâce au film lubrifiant auto-entretenu entre elles-mêmes et les portées annulaires 40 et 48. Ces portées peuvent être avantageusement interrompues par des créneaux 50 comme représenté figure 4. L'appui s'effectue alors sur des plots 51 laissant entre eux libre passage au lubrifiant vers les garnitures d'étanchéité. Cette disposition permet par ailleurs d'éviter le gommage après une longue période d'arrêt. Enfin la rotation du joint homocinétique sous angle, induit une lente rotation de la navette 38 relativement au barillet 12 et à l'arbre 7, influant très favorablement sur la conservation de la géométrie et de l'état des surfaces de glissement 39 et 46.

Le bas de la figure 3 représente le joint homocinétique lorsque l'arbre 7 fait un angle A avec l'axe ZO du barillet 12, sans déplacement axial. Le centre P de la surface sphérique 46 de l'élément suiveur 47 est alors passé en P₁ et l'axe de la navette est passé de ZP en Z′P₁ en demeurant parallèle à sa position d'origine. La course radiale de la navette 38 est donc égale à PP₁, autrement dit, au cours d'une révolution sous angle A d'environ 13° les lèvres d'étanchéité de la garniture 42 auront effectué un parcours de glissement égal à: 2 π x PP₁. Sous l'aspect de la vitsesse de glissement et de l'échauffement, les conditions de travail sont équivalentes à celles d'une garniture tournante dont le rayon de glissement serait égal à PP₁ donc de très petit diamètre avec une vitesse de rotation identique.

Pour des angles de travail plus petits, la vitesse de glissement serait encore plus petite, et il en est de même pour le garniture 45 portant sur la surface sphérique 46 de l'élément suiveur 47.

Cette version permet des coulissements relativement importants. Par ailleurs, une collerette 53 en matière plastique armée par exemple, représentée en traits interrompus et fixée sur un goulot 54 du couvercle 43 peut être installée pour protéger la surface polie de l'arbre 7 des projections latérales de corps durs tels que les graviers.

Une bague élastique 55 limite silencieusement le mouvement d'extension de l'arbre par butée contre la bague filetée 50.

Dans le mode de réalisation représenté à la figure 5, une navette 56 peut osciller et coulisser sur l'arbre pour l'obstruction de l'ouverture 19 grâce à l'élément suiveur 57 ayant une surface sphérique 58 qui s'articule sur des portée sphériques complémentaires 60 d'anneaux anti-friction 61 et 62 solidaires de la navette. Une bague filetée 63 retient axialement ces anneaux ainsi qu'une garniture d'étanchéité 64 en butée contre un épaulement 65 terminant un alésage central 56a de la navette 56.

La rotule 57 est apte à coulisser sur l'arbre 7, l'étanchéité entre ces deux organes étant effectuée par la garniture coulissant 66.

La navette 56 comprend un plateau 67 portant une surface polie ou glacée 77 sur laquelle porte extérieurement une surface annulaire 68 du collet 69 en matériau anti-friction tel que bronze, alliage léger, ou matière plastique, ainsi que les lèvres ou arêtes d'étanchéité d'une garniture 70 logée dans le collet 69 fixé d'une manière étanche dans l'ouverture du barillet 12 par la bague d'arrêt 71 et le joint torique 72.

Un disque élastique mince 73 pincé axialement entre le rebord extérieur du couvercle 69, une cale 74 et un épaulement 75 d'un chambrage du barillet 12, porte des plots 76 en matière anti-friction qui exercent sur la face interne de la navette 56 une légère pression suffisante pour permettre à l'arrêt l'étanchéité de la garniture 70 contre la face externe 77 de la navette 56. Lors de la mise en vitesse, le surcroît de poussée de la pression centrifuge du lubrifiant est contrebalancé par la portée annulaire 68.

Le niveau dynamique du lubrifiant 78 représenté schématiquement montre que les surfaces actives des portées 68 et des plots 76 sont immergées dans le lubrifiant puisqu'ils se trouvent à l'intérieur de la capacité fermée par les garnitures 70.

De même, les portées actives 59 et 60 sont comprises dans l'enceinte close par les garnitures 64 et 66 et immergées dans le lubrifiant au moins à l'arrêt.

Lors de la mise sous angle A de l'arbre, l'axe de la navette PO passe en P₁Y. Les positions extrêmes de coulissement du centre O du croisillon sont représentées par O₁ et O₂.

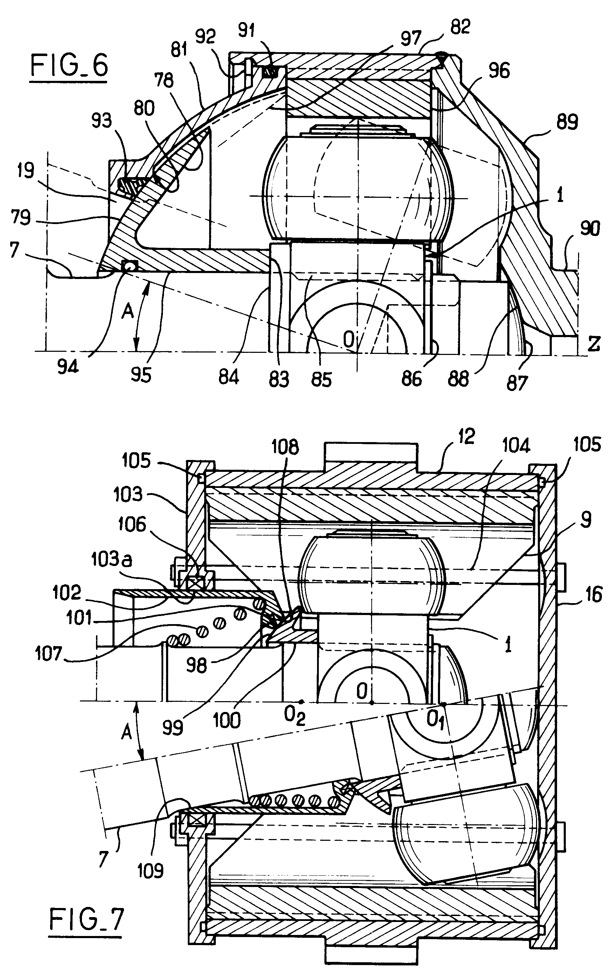

La figure 6 représente une version particulièrement compacte et simple de l'invention appliquée à un joint homocinétique fixe axialement, c'est-à-dire libre en oscillation uniquement et donc non coulissant. Le centre d'articulation O du joint est donc fixe par rapport aux deux éléments (croisillon et barillet) du joint.

Le dispositif de protection et de retenue du lubrifiant remplit de surcroît la fonction de retenue axiale du croisillon relativement au barillet et vise les applications des cardans en apportant l'avantage apprécié de l'homocinétie et donc la possibilité d'une angularité continue de 10 ou 15°.

Il est d'une part parfaitement centré radialement sur l'axe OZ du bol ou barillet 82 solidaire de l'arbre d'entrée 90 par le joint homocinétique selon le FR-A-2 566 858 et la demande française non publiée 91 08 048. Il est d'autre part retenu en position fixe axialement par une collerette 78, constituant la navette, et dont une surface sphérique externe 79 rotule en appui sur la portée annulaire interne 80 d'un collet 81 en matériau anti-friction métallique ou plastique fermant partiellement le barillet 82. Le bord intérieur 83 d'une douille centrale de la collerette 78 est en appui sur une bague 84 élastique axialement composée d'élastomère ou de rondelles type "Ondulex", cette bague étant elle-même en appui contre le croisillon 1, ceci de manière à obstruer l'ouverture 19c du collet 81.

L'arbre 7 fixé à l'intérieur du croisillon 1 par des cannelures 85 et une bague d'arrêt 86, porte en extrémité un tampon à butée sphérique 87 rotulant sur une surface sphérique concave 88 usinée dans un plateau 89 reliant le barillet 82 à un arbre de commande 90. Un joint torique statique 91 et une bague d'arrêt 92 maintiennent hermétiquement le collet 81 sur le barillet 82.

Un joint à lèvres 93, ou de toute autre technique connue contigu à la portée annulaire 80 et situé à l'intérieur de cette portée, constitue la seule étanchéité mobile de cette version.

Un joint torique statique 94 assure un contact étanche entre l'arbre 7 et l'alésage 95 de la collerette 78.

Les couloirs 96 sont particulièrement courts et permettent ainsi le débattement angulaire de la collerette 78 représentée en traits interrompus 97 pour une angularité A du joint homocinétique voisine d'une vingtaine de degrés.

La figure 7 représente une autre version ne comportant qu'une seule garniture d'étanchéité dynamique 98 portant sur une surface de glissement polie sphérique 99 dont le centre coïncide en permanence avec le centre O du croisillon. Cette surface sphérique 99 durcie et polie, est usinée sur une collerette 100 en appui sur le croisillon 1, constituant une navette mobile. La garniture d'étanchéité 98 est logée dans un chambrage 101 d'un fourreau 102 coulissant et se guidant dans l'ouverture cylindrique 103a du collet 103. Ce dernier est fixé et centré sur le barillet 12 par quatre tirants 104 passant entre les couloirs 9 comme représenté en traits interrompus, figure 2. Ces tirants 104 maintiennent également le fond 16 plaqué et centré sur le barillet 12. L'étanchéité entre le fond 16, le barillet 12 et le collet 103 s'effectue grâce à deux garnitures toriques 105. Une garniture 106 assure l'étanchéité du passage coulissant du fourreau 102 dans l'alésage 103a du couvercle 103.

Un ressort hélicoïdal 107, ou à base de rondelles élastiques, procure une légère précontrainte axiale de valeur constant de l'extérieur vers l'intérieur du joint, amenant la portée annulaire 108 du fourreau 102 contiguë, du côté de l'intérieur du joint de transmission, à la garniture d'étanchéité dynamique 98, en appui contre la surface sphérique 99 de la collerette 100. Le ressort 107 est logé dans l'espace annulaire entre le fourreau et l'arbre 7.

Lors de la mise sous angle A, l'arbre 7 se débat à l'intérieur du fourreau 102, l'angularité étant limitée par le contact en 109 entre l'arbre 7 et le bord axialement extérieur de l'alésage du fourreau 102.

Le débattement angulaire maximum est dans cette version indépendant du coulissement, soit en compression jusqu'en O₁ comme représenté en bas de la figure 6, soit en extension jusqu'en O₂.

Bien entendu, l'invention n'est pas limité aux exemples décrits.

## Revendications

1. Dispositif de protection et de retenue de lubrifiant pour joint de transmission articulé, notamment joint homocinétique, comprenant un élément extérieur ou barillet (12, 82) et un élément intérieur relié à un arbre (7), l'élément extérieur (12, 82) ayant un bord définissant une ouverture (19) autour de l'arbre (7), caractérisé en ce qu'il comprend un collet (17, 43, 69, 81, 103) qui définit le bord ouvert (19) de l'élément extérieur avec un diamètre rétréci correspondant sensiblement au débattement angulaire permis à l'arbre (7) relié à l'élément intérieur, et une navette (23, 38, 56, 78, 100) mobile dans un sens sensiblement radial et interposée entre le bord de ladite ouverture (19) et l'arbre (7), avec lesquels elle coopère par l'intermédiaire de moyens d'étanchéité et/ou d'articulation (20, 42, 70, 93, 106) et (27, 45, 64, 94, 98), quelle que soit la position angulaire relative des deux éléments du joint de transmission.

2. Dispositif selon la revendication 1, caractérisé en ce que les moyens d'articulation étanche ont un centre (P) situé sur l'axe de l'arbre (7) à l'intérieur du joint homocinétique.

3. Dispositif selon la revendication 1 ou 2, caractérisé en ce que la navette mobile (23, 38, 56) est en contact mobile étanche, par une première garniture d'étanchéité (20, 42, 70), avec le bord de l'ouverture (19, 19A, 19B) et en contact mobile étanche, par une seconde garniture d'étanchéité (27, 45, 64), avec une face sphérique (29, 46, 58, 99) d'un élément suiveur (28, 47, 57) qui est apte à coulisser coaxialement sur l'arbre (7), le mouvement angulaire de ladite rotule en fonction des oscillations de l'arbre (7) provoquant par glissement, un mouvement sensiblement radial de la navette mobile (23, 38, 67).

4. Dispositif selon la revendication 3, caractérisé en ce que la navette mobile (23) comporte une surface sphérique extérieure (24) portant sur une surface sphérique complémentaire (36) solidaire du collet (17) au voisinage de son ouverture (19), de manière à réaliser entre le collet et la navette une liaison de rotule centrée sur l'axe (Z) de l'élément extérieur.

5. Dispositif selon la revendication 4, caractérisé en ce que lorsque le joint est aligné, les deux liaisons de rotule étanche entre la navette mobile et d'une part le collet et d'autre part l'élément suiveur ont des centres (P, Q) situés de part et d'autre du centre d'articulation (O) du joint.

6. Dispositif selon la revendication 3, caractérisé en ce que la navette mobile (38) comporte une surface de glissement radial plane (39) montée en glissement étanche contre une portée annulaire plane (40) disposée à proximité de l'ouverture (19) du collet.

7. Dispositif selon l'une des revendications 3 à 6, caractérisé en ce qu'une bague de portée (25, 44) emmanchée dans un chambrage (26, 38a) de la navette (23, 38) et glissant sur la surface sphérique (29, 46) de l'élément suiveur, comporte un évidement contenant la seconde garniture d'étanchéité (27, 45).

8. Dispositif selon l'une des revendications 3 à 7, caractérisé en ce que l'élément suiveur (28, 47) comporte autour de l'arbre (7) un chambrage (30) dans lequel est logée une troisième garniture d'étanchéité en coulissement (31, 49) retenue dans ledit chambrage (30) par une douille concentrique (32) apte à coulisser axialement sur l'arbre (7) du côté de l'intérieur du joint par rapport à la troisième garniture.

9. Dispositif selon l'une des revendication " à 8, caractérisé en ce que la liaison de contact mobile étanche de l'élément suiveur par rapport à la navette (27, 38) est dissociable par déplacement de l'élément suiveur (28, 47) vers l'intérieur du joint et la liaison de glissement de la navette (23, 38) par rapport au collet (17, 43) est dissociable par déplacement de la navette et de l'élément suiveur vers l'intérieur du joint, et en ce qu'un moyen élastique (33) exerce une poussée axiale sur l'élément suiveur du côté intérieur du joint pour maintenir les liaisons de contact mobile étanche sous une force appropriée.

10. Dispositif selon la revendication 3 ou 6, caractérisé en ce que la navette mobile (56) comprend un plateau (67) emprisonné, avec possibilité de glissement dans un plan radial, dans une feuillure du collet, et relié par une liaison de rotule étanche indéboîtable avec l'organe suiveur (57)

11. Dispositif selon la revendication 1 ou 2 pour joint de transmission à centre d'articulation fixe (O), caractérisé en ce que la navette mobile comprend une collerette (78) destinée à être en position fixe sur l'arbre (7) et dont une surface sphérique (79) ayant pour centre le centre d'articulation (O) du joint est en contact mobile étanche sur une portée annulaire interne (80) du collet (81) pour l'obturation de l'ouverture (19) de ce dernier.

12. Dispositif selon la revendication 1 ou 2, caractérisé en ce que la navette mobile est constituée par une collerette (100) destinée à être montée en position fixe sur l'arbre (7) et dont une surface sphérique (99) est en liaison de rotule étanche avec un extrémité intérieure d'un fourreau (102) monté en coulissement étanche dans l'ouverture (19) du collet.

13. Dispositif selon la revendication 12, caractérisé en ce qu'un organe élastique (107) sollicite le fourreau (102) vers l'intérieur du joint pour assurer une précontrainte axiale à la liaison de rotule étanche entre le fourreau (102) et la surface sphérique (99) de la collerette (100).

14. Dispositif selon l'une des revendications 13, caractérisé en ce qu'il y a entre le collet (17, 43, 69, 81, 103) et l'arbre (7) au moins un contact glissant étanche comprenant une surface polie (23, 29 ; 39, 46 ; 79 99) sur laquelle s'appuie une portée complémentaire (36, 37 ; 40, 48, 68, 80 ; 108) de la surface polie et réalisé en matériau anti-friction, et une garniture d'étanchéité (20, 27 ; 42, 45 ; 70 ; 93 ; 98) montée dans un évidement du matériau anti-friction, la portée se trouvant du côté de la garniture exposé au lubrifiant.

15. Joint de transmission articulée comprenant un élément extérieur comprenant un fût (12) et quatre couloirs (9) oscillant contre une paroi intérieure du fût (12) et s'ouvrant vers un axe (ZZ′) du fût, ces quatre couloirs étant accouplés entre eux pour osciller en opposition de phase, et un élément intérieur comprenant un croisillon dont quatre bras (2) sont engagés chacun de manière mobile dans l'un des couloirs, caractérisé en ce que le joint est équipé d'un dispositif de protection selon l'une des revendications 1 à 14.
